Europäisches Patentamt

European Patent Office

Office européen des brevets

(11) Veröffentlichungsnummer: **0 305 731 B1**

(19)

# (12) EUROPÄISCHE PATENTSCHRIFT

(45) Veröffentlichungstag der Patentschrift: **11.03.92**

(21) Anmeldenummer: **88112091.9**

(22) Anmeldetag: **27.07.88**

(51) Int. Cl.⁵: **E05C 9/24**, E05F 7/08

(54) **Stulpschienen-Eckverbindung.**

(30) Priorität: **02.09.87 DE 3729215**

(43) Veröffentlichungstag der Anmeldung:
**08.03.89 Patentblatt 89/10**

(45) Bekanntmachung des Hinweises auf die
Patenterteilung:
**11.03.92 Patentblatt 92/11**

(84) Benannte Vertragsstaaten:
**AT BE CH DE ES FR GB IT LI NL SE**

(56) Entgegenhaltungen:
**DE-A- 2 327 086**
**DE-A- 2 365 893**
**DE-A- 3 021 309**

(73) Patentinhaber: **SIEGENIA-FRANK KG**
**Eisenhüttenstrasse 22 Postfach 10 05 01**
**W-5900 Siegen 1(DE)**

(72) Erfinder: **Roth, Ernst**
**Am Rennche 13**
**W-5901 Wilnsdorf(DE)**

## Beschreibung

Die Erfindung betrifft eine Stulpschienen-Eckverbindung zwischen zwei im wesentlichen rechtwinklig zueinander am Flügel oder am Rahmen eines Fensters oder einer Tür zu befestigenden Beschlag-Bauteilen von Treibstangenbeschlägen, bei denen die Stulpschienen mit ihren beiden Längskanten gegen Nutstufen einer Treibstangennut im Flügel- oder Rahmenprofil abstützbar und mit quer zu ihren Ebenen gerichteten, in den Nutgrund eindringenden Schrauben festlegbar sowie mit Hilfe von in gegenseitigen Formschlußeingriff bringbaren Verbindungsteilen verbindbar sind.

Eine derartige Stulpschienen-Eckverbindung, die ohne lose Einzelteile auskommt, zu ihrer Montage keine Werkzeuge benötigt, aber so ausgestaltet ist, daß bei der Montage die Verbindungsteile zwangsläufig in Eingriff gebracht werden müssen, ist grundsätzlich bekannt durch die DE-PS 23 02 538. Hierbei sind die Verbindungsteile durch an den Stulpschienenenden fest angeordnete, klauenartig ineinandergreifende U-förmige Haken gebildet, bei denen die seitlichen Flanken des rechteckigen Hakenmauls des einen Hakens senkrecht und die Seitenflanken des rechteckigen Hakenmauls des anderen Hakens parallel zur jeweiligen Stulpschienenebene verlaufen. In der Verbindungsstellung greift jeweils das freie Ende des einen Hakens in das Hakenmaul des anderen Hakens ein und die Anordnung der Haken ist derart, daß sie bei montierten Stulpschienen von der Treibstangennut aufgenommen sind, wobei die Haken eine geringere Breite als die Stulpschienen aufweisen und symmetrisch zur Längsachse der Stulpschienen angeordnet sind.

In weiterer Ausgestaltung dieses Lösungsprinzips wurde gemäß DE-OS 23 65 893 auch schon eine Stulpschienen-Eckverbindung entwickelt, die sich besonders dadurch auszeichnet, daß jeder Haken als ein Doppelhaken ausgebildet ist und dabei der Doppelhaken an der einen Stulpschiene eine zu deren Längsrichtung etwa C-förmige Querschnittsgestalt hat, bei der die Enden der Seitenflanken sich einander zugewendet sind, während der Doppelhaken an der zweiten Stulpschiene dazu passend eine quer zu deren Ebene etwa T-förmig begrenzte Umrißform aufweist, bei der die Enden der Seitenflanken voneinander weggerichtet sind. Hierbei befindet sich der etwa C-förmige Doppelhaken an einem Formteil, das mit der Rückseite der Stulpschiene fest verbunden sowie durch einen Boden verschlossen ist, der eine Stützauflage für den etwa T-förmigen Doppelhaken der zweiten Stulpschiene bildet.

Diese bekannte Ausgestaltung einer Stulpschienen-Eckverbindung hat sich im praktischen Einsatz besonders bewährt, weil sie nicht nur eine weitere Verbesserung der Formschlußverbindung zwischen den beiden Stulpschienen ergibt, sondern darüberhinaus auch noch eine fertigungsgünstige Ausbildung der miteinander zu kuppelnden Stulpschienenenden ermöglicht.

Ebenfalls auf der Basis der DE-PS 23 02 538 wurde gemäß DE-OS 23 27 086 eine Stulpschienen-Eckverbindung entwickelt, welche die Möglichkeit bietet, die beiden Stulpschienen im Eckbereich so miteinander zu verbinden, daß sich diese beiden Teile schon vor ihrem Befestigen am Flügel oder Rahmen eines Fensters nicht mehr lösen können. Erreicht wird dieser Vorteil dadurch, daß als das Hakenmaul im Abstand von der Rückseite der Stulpschiene begrenzende, parallel zur Stulpschienenebene verlaufende Seitenflanke ein etwa sägezahnförmig gestalteter Vorsprung vorgesehen ist, der eine Tasche begrenzt, welche im wesentlichen quer von der Rückseite der Stulpschiene weggerichtet ist. Der Seitenflanke dieser Tasche ist in einem der Dicke der zweiten Stulpschiene entsprechenden Abstand ein Anschlag zugeordnet, der ein Abstützung für die Rückseite der zweiten Stulpschiene bildet, damit diese durch begrenztes Verschwenken relativ zur ersten Stulpschiene mit der Öffnung einer in das Hakenmaul eingeschobenen Öse formschlüssig in den etwa sägezahnförmig gestalteten Vorsprung einrastbar ist.

Der besondere Vorteil bei der Stulpschienen-Eckverbindung nach den Fig. 1 und 2 DE-OS 23 27 086 liegt darin, daß der Eingriff der Hakenenden der Stulpschienen in jedem Falle einfach und sicher herbeigeführt werden kann. Zunächst werden nämlich die miteinander zu kuppelnden Enden der beiden Stulpschienen unter einem stumpfen Winkel zueinander zusammengesteckt und dann der Eingriff dadurch gesichert, daß beide Stulpschienen durch Verschwenken relativ zueinander in eine Winkellage von etwa 90° gebracht werden.

Der Erfindung liegt die Aufgabe zugrunde, eine das Lösungsprinzip der DE-OS 23 65 893 nutzende Stulpschienen-Eckverbindung entsprechend der DE-OS 23 27 086 so auszugestalten, daß über das im Innenwinkel der Stulpschienen-Eckverbindung angeordnete - also von der Treibstangennut aufgenommene - Formteil die bereits vor ihrem Befestigen miteinander verbundenen Stulpschienen während der Durchführung der Einbauarbeiten nicht mehr außer Eingriff gelangen können, sondern zusammen mit weiteren Beschlagteilen eine ausschließlich durch die klauenartig ineinandergreifenden Doppelhaken dreidimensional gesichert vormontierte, winkelförmige Baueinheit bilden.

Diese komplexe Aufgabe wird durch die im Anspruch 1 angegebenen Merkmale gelöst, deren besonderes Kennzeichen darin besteht, daß der die etwa C-förmige Querschnittsgestalt aufweisende Doppelhaken an den einander zugewendeten Enden seiner Seitenflanken je eine von der ihn tragenden Stulpschiene weggerichtete Nase trägt, daß die dem Boden des Formteils zugewendete Kante jeder Nase von diesem Boden einen Abstand hat, welcher an die Dicke der den T-förmigen Doppelhaken tragenden Stulpschiene angepaßt ist, und daß die Nasen in Richtung gegen den Boden des Formteils hin wirksame Anschläge bilden, welche das den T-förmigen Doppelhaken tragende Ende der anderen Stulpschiene an seinen Querkanten hintergreifen.

Der besondere Vorteil einer solchen Stulpschienen-Eckverbindung ist darin zu sehen, daß am Bau- und Funktionsprinzip der Stulpschienen-Eckverbindung nach DE-OS 23 65 893 die Sicherungs-Verbindung entsprechend der DE-OS 23 27 086 gewährleistet wird. Die uneingeschränkte Benutzbarkeit von Beschlag-Bauteilen, deren Stulpschiene den Doppelhaken mit quer zu ihrer Ebene etwa T-förmig begrenzter Umrißform aufweist, in Verbindung mit Beschlag-Bauteilen, die den Doppelhaken mit etwa C-förmiger Querschnittsgestalt nach DE-OS 23 65 893 benutzen bleibt zugleich erhalten.

Eine fertigungsmäßig besonders vorteilhafte Ausgestaltung ergibt sich erfindungsgemäß, wenn nach Anspruch 2 das den etwa C-förmigen Doppelhaken bildende Formteil ein Stanz-Biege-Formteil aus Blech ist, bei dem der Boden von einem abgewinkelten Lappen gebildet wird, welcher eine wenigstens annähernd der Breite der Stulpschiene entsprechende Breite hat und beidseitig über die Außenfläche der Seitenflanken des im Querschnitt etwa C-förmigen Doppelhakens vorsteht.

Bewährt hat es sich ferner, wenn erfindungsgemäß nach Anspruch 3 die Seitenflanken des im Querschnitt etwa C-förmig gestalteten Doppelhakens ebenfalls jeweils von einem abgewinkelten Lappen des Stanz-Biege-Formteils gebildet sind, der eine sich zum Boden hin längs einer konkav kreisbogenförmig gekrümmten Kante allmählich vergrößernde Breite hat, wobei diese kreisbogenförmig gekrümmte Kante an die obere Begrenzungskante der Nasen an den einander zugewendeten Enden der Seitenflanken anschließt.

Ein weiterbildendes Erfindungsmerkmal wird nach Anspruch 4 ferner darin gesehen, daß die sich einander zugewendeten ende der Seitenflanken des etwa C-förmigen Doppelhakens durch in die Lappen eingeprägte Verkröpfungen gebildet sind, welche sich von der Innenseite des Bodens des Stanz-Biege-Formteils etwa über ein Drittel der Gesamtänge dieses Stanz-Biege-Formteils erstrecken.

Als wichtig für die Stabilität und insbesondere den optimalen Zusammenhalt der Stulpschienen-Eckverbindung hat sich auch erwiesen, daß nach Anspruch 5 zwischen dem Boden des Stanz-Biege-Formteils sowie der diesem zugewendeten Kante jeder Nase ein etwa gabelförmiger Einschnitt begrenzt ist, in den die Querkanten der den etwa T-förmigen Doppelhaken tragenden Stulpschiene einrückbar sind.

Schließlich erweist es sich gemäß Anspruch 6 auch noch als für die Erfindung vorteilhaft, daß die einander zugewendeten Enden der Seitenflanke des etwa C-förmigen Doppelhakens an ihrer jeweils von den Nasen abgewendeten Fläche über ein dem Abstand zwischen der Innenseite des Bodens und der ihr zugewendeten Kante der Nasen entsprechendes Maß etwa rechtwinklig zur Ebene des Bodens verläuft, während deren anschließender Bereich unter einem stumpfen Winkel hierzu der benachbarten Nase zugewendet ist. Diese Ausgestaltung erleichtert einerseits das Zusammenführen der miteinander in Eingriff zu bringenden Doppelhaken und stellt andererseits einen spielarmen Zusammenhalt der Doppelhaken in ihrer Verbindungsstellung sicher.

Der Treibstangenbeschlag nach DE-PS 30 21 309 macht sich zwar das Eingriffs-Sicherungsprinzip nach den Fig. 1 und 2 der DE-OS 23 27 086 bei einer Stulpschienen-Eckverbindung nach DE-OS 29 49 051 zu nutze. Da dort jedoch die Verbindungteile jeweils aus von einer zu einer Schienenlängskante hin offenen, winkelförmigen Aussparung gebildeten Hakenenden bestehen, ist dabei die Möglichkeit gegeben, daß die Verbindung bei noch nicht in die Treibstangennut von Flügel oder Rahmen eingesetzten Stulpschienen in Richtung der Stulpschienenebene auseinandergleiten kann, wenn nicht zusätzlich an den Stulpschienen befestigte Beschlagteile vorhanden sind, die miteinander in Richtung quer zu den Stulpschienenebenen in Eingriff gelangen. Wo solche zusätzlichen Beschlagteile nicht vorhanden sind, ist jedoch die Eingriffsverbindung zwischen den miteinander gekuppelten beiden Stulpschienen bis zum Einsetzen in die Treibstangennut in der dritten Dimension nicht gesichert.

Anhand der Zeichnung wird nachstehend ein Ausführungsbeispiel der Erfindung ausführlich erläutert. Es zeigt

Fig. 1　teilweise im Längsschnitt und teilweise in Seitenansicht die wesentlichen Funktionselemente einer Stulpschienen-Eckverbindung vor ihrem Zusammenbau,

Fig. 2　in Seitenansicht die Funktionselemente der Stulpschienen-Eckverbindung in ihrer der Einleitung des Kupplungsvorgangs entsprechenden Relativlage zueinander,

Fig. 3　die Funktionselemente der Stulpschienen-Eckverbindung in ihrer ordnungsgemäßen Kupplungsstellung, aber vor dem Einbau in die Treibstangennut eines Flügel- oder Rahmenprofils,

Fig. 4    eine Ansich in Pfeilrichtung IV der Fig. 1,

Fig. 5    eine Ansicht in Pfeilrichtung V der Fig. 2 und 3 sowie

Fig. 6    in räumlicher Ansichtsdarstellung zwei durch eine Stulpschienen-Eckverbindung miteinander gekuppelte Beschlag-Bauteile eines Treibstangenbeschlages.

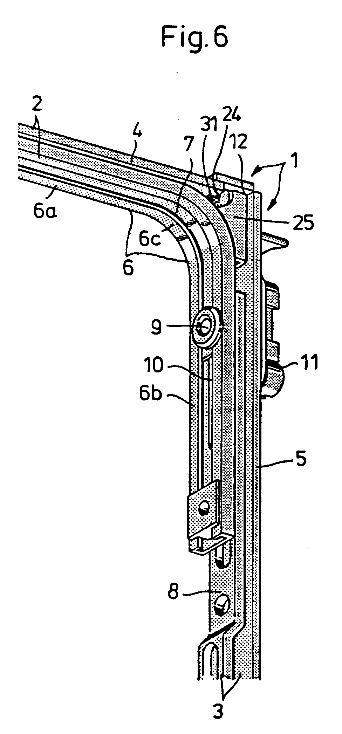

In Fig. 6 der Zeichnung ist - etwa in natürlicher Größe - der Eckbereich eines Treibstangenbeschlages 1 für Fenster, Türen od. dgl. dargestellt, welcher aus zwei Beschlag-Bauteilen 2 und 3 zusammengesetzt ist, die sich im wesentlichen rechtwinklig zueinander erstrecken. Das Beschlag-Bauteil 2 weist eine Stulpschiene 4 auf, während das Beschlag-Bauteil 3 eine Stulpschiene 5 hat. Beide Stulpschienen 4 und 5 bestehen dabei vorzugsweise aus einem metallischen Werkstoff, insbesondere Stahl. Sie lassen sich aus Bandmaterial mit flachrechteckigem Querschnitt fertigen.

Die Stulpschiene 4 des Beschlag-Bauteils 2 trägt an ihrer Rückseite einen abgewinkelten Profil-Führungskanal 6 mit zwei geraden, etwa im rechten Winkel zueinander gerichteten, Schenkeln 6a und 6b, die einstückig durch ein bogenartig gekrümmtes Mittelstück 6c verbunden sind. In diesem Profil-Führungskanal 6 ist ein flexibles Umlenkglied 7, beispielsweise aus Federstahlband od. dgl., ausschließlich längsschiebbar angeordnet, das zur getrieblichen Verbindung von an der Rückseite der beiden Stulpschienen 4 und 5 längsschiebbar gehaltenen Treibstangen dient. Eine solche Treibstange 8 ist an der Rückseite der Stulpschiene 5 geführt und bildet zusammen mit dieser das Beschlags-Bauteil 3. Eine ähnliche Treibstange ist auch hinter der Stulpschiene 4 vorgesehen, jedoch in Fig. 6 der Zeichnung nicht gezeigt.

Zur Verbindung des Umlenkgliedes 7 mit den Treibstangen 8 dienen jeweils Mitnehmer, von denen in Fig. 6 nur der Mitnehmer 9 gezeigt ist, welcher durch einen Längsschlitz 10 im Boden des Profil-Führungskanals 6 vorsteht und mit einer - nicht gezeigten - Mitnehmeraussparung der Treibstange 8, beispielsweise quer zur Verstellrichtung der Treibstange 8 lösbar, in Eingriff zu bringen ist.

Die Treibstangen, beispielsweise die Treibstange 8, des Treibstangenbeschlages 1 dienen zur Bewegung von Funktionsteilen, wobei eines derselben in Fig. 6 gezeigt und als Riegelglied 11 ausgebildet ist. Dieses Riegelglied 11 ist dabei entlang der äußeren Breitseite der Stulpschiene 5 in deren Längsrichtung verschiebbar angeordnet und steht zu diesem Zweck über einen Schaft mit der Treibstange 8 in Verbindung, welcher einen - nicht gezeigten - Längsschlitz in der Stulpschiene 5 durchgeift.

Die beiden Beschlag-Bauteile 2 und 3 des Treibstangenbeschlages 1 sind miteinander über ihre Stulpschienen 4 und 5 durch eine Stulpschienen-Eckverbindung 12 lösbar zu einer funktionnssicher am Flügel oder Rahmen eines Fensters bzw. einer Tür anschlagfähigen Baueinheit vormontierbar.

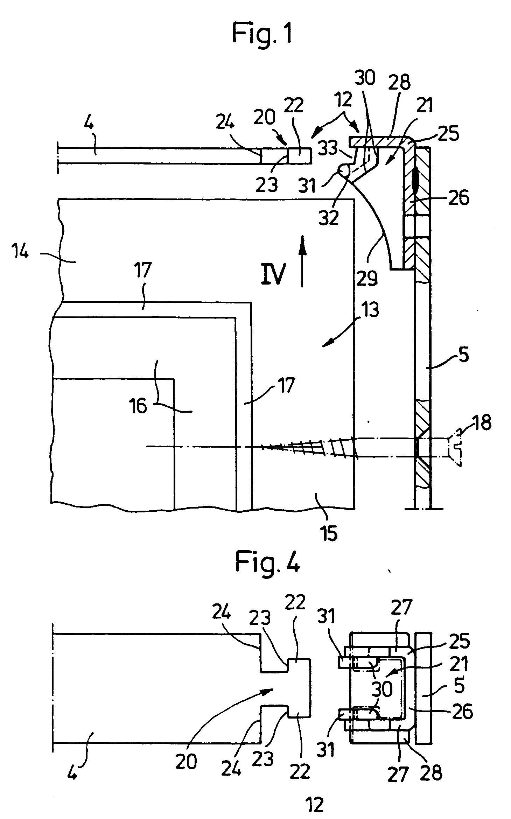

Ausbildung und Wirkungsweise dieser Stulpschienen-Eckverbindung 12 sind im einzelnen in den Fig. 1 bis 5 der Zeichnung zu sehen und werden anschließend im einzelnen abgehandelt.

In Fig. 1 der Zeichnung ist andeutungsweise die Rahmenecke des Flügels 13 eines Fensters oder einer Tür dargestellt, an dessen waagerechtem Schenkel 14 die Stulpschiene 4 und an dessen aufrechtem Schenkel 15 die Stulpschiene 5 des Treibstangenbeschlages 1 angeschlagen werden soll.

Die Stulpschienen 4 und 5 haben dabei den Zweck, eine um die Flügelecke herumführende Treibstangennut 16 an ihrer offenen Seite bündig abzudecken, wobei sie sich mit ihren beiden Längskanten auf an der Öffnungsseite dieser Treibstangennut 16 gelegenen Stufen 17 abstützen.

Zur Befestigung der Stulpschienen 4 und 5 damit der Beschlag-Bauteile 2 und 3 am Flügel 13 dienen in bekannter Weise Schrauben 18, die entsprechende Löcher in den Stulpschienen 4 und 5 durchdringen und dabei in den Boden der Treibstangennut 16 eingedreht werden.

Damit die Stulpschienen 4 und 5 der beiden Beschlag-Bauteile 2 und 3 durch gegenseitige Fixierung auch im unmittelbaren Eckbereich des Flügels 13 sicher festgelegt werden können, ohne daß dort Schrauben 18 benutzt werden müssen, ist die Stulpschienen-Eckverbindung 12 vorgesehen. Sie wird von einem Doppelhaken 20 an der Stulpschiene 4 und einem dazu komplementär passenden Doppelhaken 21 an der Stulpschiene 5 gebildet.

Wie besonders deutlich aus Fig. 1 ersichtlich ist, hat der Doppelhaken 20 an der Stulpschiene 4 eine etwa T-förmige Umrißform, wobei die freien Hakenenden 22 voneinander weggerichtet sind. Der Doppelhaken 20 liegt dabei völlig in der Stulpschienenebene und kann daher durch einen einfachen Stanzvorgang hergestellt werden. Die Kupplungsflanken 23 an den Hakenenden 22 des Doppelhakens 20 erstrecken sich quer zur Hauptebene der Stulpschiene 4, aber im wesentlichen parallel zu deren Querkante 24, an welche der Doppelhaken 20 mit seinem Steg, vorzugsweise materialeinheitlich, anschließt.

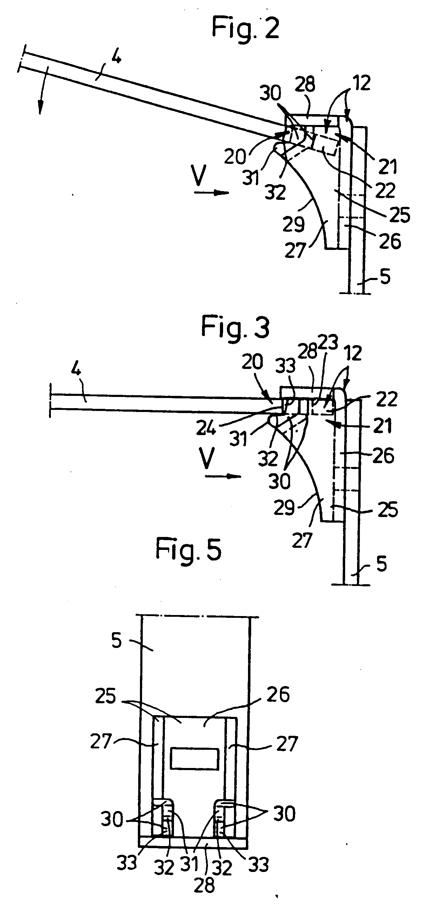

Besonders aus Fig. 4 geht hervor, daß der Doppelhaken 21 an der Rückseite der Stulpschiene 5 sitzt und einen etwa C-förmigen Querschnitt aufweist. Er kann dabei von einem Formteil 25, insbesondere einem Stanz-Biege-Formteil aus Blech, gebildet werden, das über eine Stegwand 26 fest mit der Rückseite der Stulpschiene 5 verbunden, beispielsweise verschweißt, ist. Von der Stegwand 26 sind etwa rechtwinklig zwei Lappen 27 als im Abstand zueinander parallel liegende Seitenflanken abgebogen. Eine ebenfalls etwa rechtwinklig von der Stegwand 26 abgebogener Lappen 28 erstreckt sich in der gleichen Richtung wie die beiden Lappen 27, ist jedoch quer zu diesen orientiert und wirkt als Boden des Formteils 25, welcher die etwa C-förmige Querschnittsgestalt des Doppelhakens 21 bzw. des Formteils 25 an dem Ende verschließt, welches unmittelbar dem Ende der Stulpschiene 5 benachbart liegt. Der den Boden bildende Lappen 28 hat dabei eine Breite, die wenigstens annähernd der Breite der Stulpschienen 4 und 5 entspricht und dabei beidseitig über die Außenflächen der als Seitenflanken wirkenden Lappen 27 des Formteils 25 vorsteht, wie das deutlich aus den Fig. 4 und 5 ersichtlich ist.

Den Fig. 1 bis 3 kann entnommen werden, daß die die Seitenflanken des im Querschnitt etwa C-förmigen Doppelhakens 21 bildenden Lappen 27 des Formteils 25 ein sich zu dem den Boden bildenden Lappen 28 hin längs einer konkav kreisbogenförmig gekrümmten Kante 29 allmählich vergrößernde Breite haben, und zwar dergestalt, daß der Krümmungsradius der Kante 29 dem Krümmungsradius der Außenfläche am bogenförmigen Mittelstück 6c des Profil-Führungskanals 6 für das biegsame Umlenkglied 7 entspricht, der in Fig. 6 zu sehen. Die kreisbogenförmig gekrümmte Kante 29 der beiden Lappen 27 des Formteils 25 bilden damit eine Abstützung für das Mittelstück 6c des Profil-Führungskanals 6, wie das in Fig. 6 kenntlich gemacht ist.

Das den Doppelhaken 21 an der Rückseite der Stulpschiene 5 bildende Formteil 25 erhält seine etwa C-förmige Querschnittsgestalt dadurch, daß in die beiden Lappen 27 jeweils von außen nach innen gerichtete Verkröpfungen 30 so eingeprägt werden, daß sie die sich einander zugewendeten Enden der aus den Lappen 27 bestehenden Seitenflanken bilden, deren lichter Abstand voneinander nur geringfügig größer bemessen ist als die Stegbreite des Doppelhakens 20 an der Stulpschiene 4.

Die Verkröpfungen 30 sind in die Lappen 27 des Formteils 25 so eingeformt, daß sie sich von der Innenseite des den Boden bildenden Lappens 28 aus nur etwa über ein Drittel der Gesamtlänge des Formteils 25 erstrecken. An ihrer der Innenseite der Stegwand 26 des Formteils 25 zugewendeten Fläche haben die Verkröpfungen 30 bzw. die hiervon gebildeten, einander zugewendeten Enden der aus den Lappen 27 bestehenden Seitenflanken eine besondere Formgestaltung. Über ein Maß hinweg, welches etwa der Dicke der Stulpschiene 4 entspricht, verlaufen die betreffenden Flächen der Verkröpfungen 30 nämlich von der Innenfläche des den Boden bildenden Lappens 28 aus etwa rechtwinklig zur Bodenebene, während deren anschließender Bereich unter einem stumpfen Winkel hierzu von der Stegwand 26 weggerichtet ist. Diese besondere Formgebung der Verkröpfungen 30 bzw. der hierdurch gebildeten, einander zugewendeten Enden der Seitenflanken des im Querschnitt etwa C-förmigen Doppelhakens 21 ist den Fig. 1 bis 3 der Zeichnung deutlich zu entnehmen. Der von der Stegwand 26 des Formteils 25 weg geneigte Verlauf des vom Lappen 28 bzw. vom Boden entfernten Abschnitts der Verkröpfungens-Flächen erleichtert das Einrücken des etwa T-förmig begrenzten Doppelhakens 20 der Stulpschiene 4 in den etwa C-förmig begrenzten Doppelhaken 21 der Stulpschiene 5 durch eine Schwenkbewegung, wie das ein Vergleich der Fig. 2 und 3 erkennen läßt. Der parallel zur Stegwand 26 gerichtete Abschnitt dieser rückwärtigen Verkröpfungs- Flächen sichert hingegen den Halteeingriff des Doppelhakens 20 in seiner aus Fig. 3 ersichtlichen Kupplungs-Endlage, weil die Kupplungsflanken 23 des Doppelhakens 20 in Richtung quer zur Ebene der Stulpschiene 4 die entsprechend orientierten Flächen der Verkröpfungen 30 oberhalb des den Boden bildenden Lappens 28 hinterfassen, wie das aus den Fig. 3 und - in strichpunktierten Linien - auch aus Fig. 4 ersichtlich wird.

Hauptsächlich in den Fig. 1 bis 3 der Zeichnung ist zu sehen, daß der die etwa C-förmige Querschnittsgestalt aufweisende Doppelhaken 21 an den die einander zugewendeten Enden seiner Seitenflanken bildenden Verköpfungen 30 je eine von der ihn tragenden Stulpschiene 5 weggerichtete Nase 31 trägt. Die dem als Boden des Formteils 25 wirksamen Lappen 28 zugewendete Kante 32 jeder Nase hat dabei von der Innenfläche dieses Bodens bzw. Lappens 28 einen Abstand, welcher der Dicke der Stulpschiene 4 angepaßt ist. Die Kanten 32 der Nasen 31 bilden dabei in Richtung gegen den Boden bzw. Lappen 28 hin wirksame Anschläge, welche das den etwa T-förmigen Doppelhaken 20 tragende Ende der Stulpschiene 4 an seinen Querkanten 24 stützend hintergreifen, wie das die Fig. und - in strichpunktierten Linien - auch die Fig. 4 verdeutlichen.

Den Fig. 1 bis 3 ist noch zu entnehmen, daß zwischen dem Boden bzw. Lappen 28 des Formteils 25 und der diesem zugewendeten Kante 32 jeder Nase 31 ein etwa gabelförmiger Einschnitt 33 begrenzt ist, in welchen die Stulpschiene 4 bei Wirklage der Stulpschienen-Eckverbindung 12 mit ihren Querkanten 24 eingreift, wie das die Fig. 3 verdeutlicht.

Die mit den beiden Doppelhaken 20 und 21 sowie den Nasen 31 ausgestattete Stulpschienen-Eckverbindung 12 ermöglicht eine dreidimensional form- und kraftschlüssige Kupplung zwischen den Stulpschienen 4 und 5 der beiden Beschlag-Bauteile 2 und 3 und erleichtert damit die Handhabung des Treibstangenbeschlages 1 bei seinem Einbau in den Flügel 13, und zwar insbesondere beim Anschlagvorgang im Bereich der Flügelecken.

**Patentansprüche**

1. Stulpschienen-Eckverbindung (12) zwischen zwei im wesentlichen rechtwinklig zueinander am Flügel (13) oder am Rahmen eines Fensters oder einer Tür zu befestigenden Beschlag-Bauteilen (2,3) von Treibstangenbeschlägen (1), bei denen die Stulpschienen (4,5) mit ihren beiden Längskanten gegen Nutstufen (17) einer Treibstangennut (16) im Flügel- (13) oder Rahmenprofil abstützbar und mit quer zu ihren Ebenen gerichteten, in den Nutgrund eindringenden Schrauben (18) festlegbar sowie mit Hilfe von in gegenseitigen Formschlußeingriff bringbaren Verbindungsteilen verbindbar sind, wobei die Verbindungsteile aus an den Stulpschienenenden (14,15) fest angeordneten, klauenartig ineinandergreifenden Doppelhaken (20,21) bestehen und dabei der Doppelhaken (21) an der einen Stulpschiene (5) eine zu deren Längsrichtung etwa C-formige Querschnittsgestalt hat, bei der die Enden der Seitenflanken (27) sich einander zugewendet sind, während der Doppelhaken (20) an der zweiten Stulpschiene (4) dazu passend eine quer zu deren Ebene etwa T-förmig begrenzte Umrißform aufweist, bei der die Enden der Seitenflanken (27) voneinander weggerichtet sind, wobei der etwa C-förmige Doppelhaken sich an einem Formteil befindet, das mit der Rückseite der Stulpschiene (5) fest verbunden sowie durch einen Boden (28) verschlossen ist, der eine Stützauflage für den etwa T-förmigen Doppelhaken (20) der zweiten Stulpschiene (4) bildet, dadurch gekennzeichnet, daß der die etwa C-förmige Querschnittsgestalt aufweisende Doppelhaken (21) an den einander zugewendeten Enden (30) seiner Seitenflanken (27) je eine von der ihn tragenden Stulpschiene (5) weggerichtete Nase (31) trägt, daß die dem Boden (28) des Formteils (25) zugewendete Kante (32) jeder Nase (31) von diesem Boden (28) einen Abstand hat, welcher an die Dicke der den etwa T-förmigen Doppelhaken (20) tragenden Stulpschiene (4) angepaßt ist, und daß die Nasen (31) in Richtung gegen den Boden (28) hin wirksame Anschläge bilden, welche das den etwa T-förmigen Doppelhaken (20) tragende Ende der anderen Stulpschiene (4) an seinen Querkanten (24) stüzend hintergreifen.

2. Stulpschienen-Eckverbindung nach Anspruch 1, dadurch gekennzeichnet, daß das den etwa C-förmigen Doppelhaken (21) bildende Formteil (25) aus einem Stanz-Biege-Formteil aus Blech besteht, bei dem der Boden von einem abgewinkelten Lappen (28) gebildet ist, welcher eine wenigstens annähernd der Breite der Stulpschiene (4 bzw. 5) entsprechende Breite hat und beidseitig über die Außenflächen der Seitenflanken (27) des im Querschnitt etwa C-förmigen Doppelhakens (21) vorsteht.

3. Stulpschienen-Eckverbindung nach Anspruch 1 oder 2, dadurch gekennzeichnet, daß die Seitenflanken des im Querschnitt etwa C-förmig gestalteten Doppelhakens (21) jeweils von einem abgewinkelten Lappen (27) des Stanz- Biege-Formteils (25) gebildet sind, der eine sich zum Boden (28) hin längs einer konkave kreisbogenförmig gekrümmten Kante (29) allmählich vergrößernde Breite hat, wobei diese kreisbogenförmig gekrümmte Kante (29) sich an die obere Begrenzungskante der Nasen (31) an den einander zugewendeten Enden (30) der Seitenflanken (27) anschließt.

4. Stulpschienen-Eckverbindung nach einem der Ansprüche 1 bis 3, dadurch gekennzeichnet, daß die sich einander zugewendeten Enden (30) der Seitenflanken (27) des etwa C-förmigen Doppelhakens (21) durch in die Lappen (27) eingeprägte Verkröpfungen gebildet sind, welche sich von der Innenseite des Bodens (28) des Stanz-Biege-Formteils (25) etwa über ein Drittel der Gesamtlänge des Stanz-Biege-Formteils (25) erstrecken.

5. Stulpschienen-Eckverbindung nach einem der Ansprüche 1 bis 4, dadurch gekennzeichnet, daß zwischen dem Boden (28) des Stanz-Biege-Formteils (25) sowie der diesem zugewendeten Kante (32) jeder Nase (31) ein etwa gabelförmiger Einschnitt (33) begrenzt ist.

6. Stulpschienen-Eckverbindung nach einem der Ansprüche 1 bis 5, dadurch gekennzeichnet,

daß die einander zugewendeten Enden (30) der Seitenflanken (27) des etwa C-förmigen Doppelhakens (21) an ihrer jeweils von den Nasen (31) abgewendeten Fläche über ein dem Abstand zwischen der Innenseite des Bodens (28) und der ihr zugewendeten Kante (32) der Basen (31) entsprechendes Maß etwa rechtwinklig zur Ebene des Bodens verläuft, während deren anschließender Bereich unter einem stumpfen Winkel hierzu der benachbarten Nase (31) zugewendet ist (Fig. 1 bis 3).

**Claims**

1. A faceplate corner connection (12) between two components (2, 3) of positioning bar devices (1), such components being adapted to be secured substantially perpendicularly to one another to the moving member or panel (13) or fixed frame of a window or door, the faceplates (4, 5) being adapted to bear by way of their two longitudinal edges on groove steps (17) in a positioning-bar groove (16) in the cross-section of the panel (13) or fixed frame and being securable by means of screws (18) which extend transversely to their planes and which penetrate into the groove base and being connectable to one another by means of positively engageable connecting parts, the same being in the form of double hooks (20, 21) which are fixedly disposed on the faceplate ends (14, 15) and which engage one in another claw-fashion, the double hook (21) on one faceplate (5) having a cross-sectional shape which is substantially in the form of a C relatively to the length of such faceplate, the ends of the side flanks (27) of such shape being near one another, whereas the double hook (20) on the second faceplate (4) has a substantially T-shaped contour adapted to the second faceplate and extending transversely of the plane thereof, the ends of the side flanks (27) of such contour extending away from one another, the substantially C-shaped double hook being disposed on a moulding which is rigidly connected to the back of the faceplate (5) and closed by a base (28) effective as a support foundation for the substantially T-shaped double hook (20) of the second faceplate (4), characterised in that the substantially C-section double hook (21) carries on each of those ends (30) if its side flanks (27) which are near one another a nosing (31) which extends away from the faceplate (5) carrying the last-mentioned double hook (21), each nosing edge (32) near the moulding base (28) is separated therefrom by a distance adapted to the thickness of the faceplate (4) carrying the substantially T-shaped double hook (20), and the nosings (31) act as abutments which are effective towards the base (28) and which engage supportingly and by way of its transverse edges (24) behind that end of the other faceplate (4) which carries the substantially T-shaped double hook (20).

2. A connection according to claim 1, characterised in that the moulding (25) serving as the substantially C-shaped double hook (21) takes the form of a sheet metal moulding produced by punching and bending, the base of the moulding being in the form of a bent tab or flap or the like (28) which has a width corresponding at least substantially to the width of the respective faceplate (4, 5) and projects on both sides beyond the outside surfaces of the side flanks (27) of the substantially C-shaped double hook (21).

3. A connection according to claim 1 or 2, characterised in that the side flanks of the substantially C-section double hook (21) each take the form of a bent tab or flap or the like (27) of the moulding (25), which tab or the like has a width gradually increasing towards the base (28) along a concave arcuate edge (29) which merges into the top boundary edge of the nosings (31) on the side flank ends (30) which are near one another.

4. A connection according to any of claims 1 to 3, characterised in that those flank ends (30) of the substantially C-shaped double hook (21) which are near one another are embodied by crankings with which the tabs or the like (27) are formed and which extend from the inside of the base (28) of the moulding (25) substantially over one-third of the total length thereof.

5. A connection according to any of claims 1 to 4, characterised in that the base (28) of the moulding (25) and that edge (32) of each nosing (31) which is near the base (28) co-operate to bound a substantially fork-shaped indentation (33).

6. A connection according to any of claims 1 to 5, characterised in that by way of their surface remote from the nosings (31) those side flank ends (30) of the double hook (21) which are near one another extend substantially perpendicularly to the plane of the base (28) by an amount corresponding to the distance between the inside of the base (28) and the nosing edge (32) near such inside while their subsequent zone, forming an obtuse angle for this purpose, is near the adjacent nosing (31) (Figs. 1 to 3).

## Revendications

1. Barre de guidage pour joint d'angle (12) entre deux éléments de quincaillerie (2, 3), essentiellement perpendiculaires l'un à l'autre, de garniture de tringle de commande (1) à fixer au battant (13) au châssis d'une fenêtre ou d'une porte, dans lequel les barres de guidage (4, 5) peuvent prendre appui par leurs deux bords longitudinaux sur des gradins de rainure (17) d'une rainure de tringle de commande (16) dans un profité de battant (13) ou de châssis, pouvant être fixées par des vis (18) orientées transversalement par rapport à leur plan et pénétrant dans le fond de la rainure et pouvant être assemblés à l'aide de pièces d'assemblage pouvant être emboîtées mutuellement l'une à l'autre, tandis que les pièces d'assemblage sont disposées de manière fixe sur les extrémités (14, 15) des barres de guidage, sont constitués de crochets doubles (20, 21) engrenant l'un avec l'autre à la manière de griffes, tandis que le crochet double (21) de la barre de guidage (5) présente une section à peu près en forme de C transversalement à sa direction longitudinale, tandis que les extrémités des flancs latéraux (27) sont tournés l'un vers l'autre et que le crochet double (20) présente un profit extérieur à peu près en forme de T qui s'adapte transversalement au plan de la deuxième barre de guidage (4) dans lequel les extrémités des flancs latéraux (27) sont écartés l'un de l'autre, tandis que le crochet double en forme de C se trouve sur une pièce de forme qui est assemblée rigidement à la face postérieure de la barre de guidage (5) et est fermé par un fond (28) qui forme une surface d'appui pour le crochet double (20) à forme peu près en T de la deuxième barre de guidage (4),
caractérisé en ce que le crochet double (21) présentant une section à peu près en forme de C porte un nez (31) s'écartant de la barre de guidage (5) qui le supporte aux extrémités tournées l'une vers l'autre de ses flancs latéraux (27),
en ce que le bord (32) de chaque nez (31) tourné vers le fond (28) de la pièce de forme (25) présente, par rapport à ce fond (28), une distance qui est adaptée à l'épaisseur de la barre de guidage (4) supportant le crochet double à forme à peu près en T (20),
et en ce que les nez (31) forment en direction tournée vers le fond (28) des butées efficaces qui viennent supporter par derrière l'extrémité de l'autre barre de guidage (4) supportant le crochet double 20 à peu près en forme de T par ses bords transversaux.

2. Barre de guidage pour joint d'angle selon la revendication 1, caractérisée en ce que la pièce de forme (25) formant le crochet double (21) à forme à peu près en C est constituée d'une pièce de forme estampée en tôle dans laquelle le fond est formé par une patte repliée (28) qui a une largeur correspondant au moins approximativement à la largeur des barres de guidage (4) ou (5) et qui fait saillie de part et d'autre par dessus les faces extérieures des flancs latéraux (27) du crochet double (21), à section à peu près en forme de C.

3. Barre de guidage pour joint d'angle selon la revendication 1 ou 2, caractérisée en ce que les flancs latéraux du crochet double (21) ayant une section à peu près en forme de C sont constitués chacun par une patte repliée (27) de la pièce de forme estampée (27) qui a une largeur graduellement croissante vers le fond (28) le long d'un bord (29) cintré de manière concave en forme d'arc de cercle, tandis que ce bord cintré en forme d'arc de cercle (29) se raccorde aux bords supérieurs des nez (31) aux extrémités tournées l'une vers l'autre (30) des flancs latéraux (27).

4. Barre de guidage pour joint d'angle selon l'une des revendications 1 à 3, caractérisée en ce que les extrémités (30) des flancs latéraux (27) du crochet double (21) à peu près en forme de C qui sont tournées l'une vers l'autre sont constituées par des coudes estampés dans les pattes (27) qui s'étendent depuis la face intérieure du fond (28) de la pièce de forme estampée (25) sur environ un tiers de la longueur totale de la pièce de forme estampée (25).

5. Barre de guidage pour joint d'angle selon l'une des revendications 1 à 4, caractérisée en ce qu'il existe entre le fond (28) de la pièce de forme estampée (25) ainsi que le bord tourné vers celle-ci (32) de chaque nez (31) une encoche (33) à peu près en forme de fourche.

6. Barre de guidage pour joint d'angle selon l'une des revendications 1 à 5, caractérisée en ce que les extrémités (30) tournées l'une vers l'autre des flancs latéraux (27) du crochet double (21) à peu près en forme de C sont disposés sur leurs surfaces opposées au nez (31) et sur une longueur correspondant à la distance entre la face intérieure du fond (28) et le bord tourné vers celle-ci (32) des nez (31) à peu près perpendiculairement au plan du fond, tandis que la zone avoisinante est tournée vers le nez voisin (31) suivant un angle obtus (figures 1 à 3).

EP 0 305 731 B1

# Fig. 1

# Fig. 4

12

Fig. 2

Fig. 3

Fig. 5

# Fig. 6